# EUROPEAN PATENT APPLICATION

(11) **EP 2 555 105 A2**
(43) Date of publication of application: **06.02.2013**
(21) Application number: 12177927.6
(22) Date of filing: 25.07.2012
(51) Int. Cl.: G06F 3/048

(54) **Touch screen having adaptive input requirements**

(30) Priority: 02.08.2011 US 201113196409
(71) Applicant: Honeywell International Inc., Morristown, NJ 07962-2245 (US)
(72) Inventor: Rogers, William, Morristown, NJ 07962-2245 (US); Nichols, Troy, Morristown, NJ 07962-2245 (US); Grothe, Steve, Morristown, NJ 07962-2245 (US)
(74) Representative: Houghton, Mark Phillip

(57) **Abstract**

A method and apparatus are provided for adapting (modifying) input requirements, such as a required touch force or a touch screen format, in response to an event, for example, important situations, detection of an increased input error rate, aircrew activation, and motion such as turbulence, aircraft vibration, and/or gravitational forces.

## Description

### TECHNICAL FIELD

The exemplary embodiments described herein generally relate to touch screens and more particularly to touch screens having modifiable input requirements.

### BACKGROUND

World wide air traffic is projected to double every ten to fourteen years and the International Civil Aviation Organization (ICAO) forecasts world air travel growth of five percent per annum until the year 2020. Such growth may have an influence on flight performance and may increase the workload of the flight crew. One such influence on flight performance has been the ability for the flight crew to input data while paying attention to other matters within and outside of the cockpit. The ability to easily and quickly input data can significantly improve situational awareness of the flight crew.

Many electronic devices, such as aircraft flight deck operational equipment, cursor control devices (CCDs), hard knobs, switches, and hardware keyboards, are increasingly being replaced by touch screens. A touch screen offers intuitive input for a computer or other data processing devices, but may be affected by movement of the touch screen and/or the pilot caused by, for example, turbulence, aircraft vibration, and/or G forces. For alphanumeric input using a touch screen, a virtual keyboard is typically displayed and the user touches the appropriate keys analogous to pushing keys on a real keyboard.

However, many of the known touch screens particularly suited for low-end general aviation applications are relatively small, and each key may be so small that input accuracy may decline during movement of the touch screen and/or the pilot caused by turbulence, aircraft vibration, and/or G forces, during critical situations, when an increased input error rate is detected, and by aircrew activation such as with the use of gloves by the aircrew, for example. Such a reduction in accuracy would induce additional attention and workload from the aircrew in an effort to successfully complete touch screen entries.

Accordingly, it is desirable to provide a touch screen whose input is adaptive to the occurrence of an event or environment. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A method and display system are provided for modifying input requirements. In an exemplary embodiment, a touch screen includes a plurality of objects for selection by a user as an input, each of the objects having boundaries and a level of force required for sensing a touch as the input. A method comprises sensing an event selected from the group consisting of a sensed motion of the touch screen, a sensed high input error rate, a functional importance, and a sensed large touch; and modifying at least one of: the boundaries of at least a portion of the objects in response to the sensed motion, high input error rate, and functional importance; and the level of force of at least a portion of the objects in response to high input error rate, functional importance, and selection by the user.

In another exemplary embodiment, a touch screen system comprises a touch screen configured to define a plurality of objects, wherein each of the objects may sense a touch as the input, wherein each object comprises an area having boundaries on the touch screen and defines a level of force required to sense the touch; a system configured to sense an event and provide an output, wherein the event is selected from the group consisting of a sensed motion, a sensed high input error rate, a functional importance, and a sensed selection by the user; a processor coupled to the touch screen and the system, and configured to modify, in response to the output, at least one of: the boundaries of at least a portion of the objects in response to the sensed turbulence, high input error rate, and functional importance, and the level of force of at least a portion of the objects in response to high input error rate, functional importance, and selection by the user.

### BRIEF DESCRIPTION OF THE DRAWINGS

The present invention will hereinafter be described in conjunction with the following drawing figures, wherein like numerals denote like elements, and

FIG. 1 is a block diagram of an aircraft system for presenting images on a display;

FIG. 2 is a first representative diagram of a known QWERTY touch screen;

FIG. 3 is a flow chart in accordance with an exemplary embodiment;

FIG. 4 is a first representative diagram of touch screen in accordance with the exemplary embodiments; and

FIG. 5 is a second representative diagram of touch screen in accordance with the exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

With touch screen input, there is a trade-off between speed and accuracy of input that is impacted by the amount of force required on the touch screen to make the input, and the layout of a virtual keyboard for data entry. If the touch force required is very light, one can generally make inputs more quickly, but the probability of making errors increases as well, especially, for example, in flight conditions that include vibration or turbulence where the pilot is more likely to unintentionally touch the screen. If a harder or firmer touch is required to activate the touch screen, fewer errors due to inadvertent touches will be made, but the speed of input will be decreased. While QWERTY keyboards are generally fast for making inputs, the number of keys, at least ten keys per row, on small displays, or a small display area, require the keys to be small, resulting in the keys being more prone to input errors.

Generally, a method and device for inputting data are provided for adapting (modifying) input requirements of a touch screen in response to an event. "Touch screen" as used herein includes a transparent or non-transparent touch screen and an opaque or transparent panel providing changeable visual information. An "event" may include, for example, motion such as turbulence, aircraft vibration, and/or G forces, important situations, the detection of an increased input error rate, and aircrew activation such as with the use of gloves by the aircrew. In the first example, as the motion surpasses a threshold that is indicative of a less than preferred environment to use the touch screen, input parameters of the touch screen are modified in order to compensate for the less than preferred environment. The modifications to the input parameters include, for example, changing the force required by the touch screen to record an input and changing the virtual keyboard format to make it easier for the aircrew to touch the intended spot on the touch screen.

The concept is to use the two design elements described above (touch force and keyboard format), known to affect speed/accuracy trade-offs in touch screen input performance, to adapt the touch screen for optimal performance in specific conditions. Specifically, the concept is to adapt the touch force required on a touch screen in order make a touch input based on pilot selection, functional importance, and a high input error rate detection, and/or to adapt the virtual keyboard layout, based on functional importance, flight conditions, and a high input error rate detection. First, for the pilot selectable adaptation, the pilot can select the touch force required before or during the flight to optimize it for his or her input style and the flight conditions. Such an adaptation would be done with software algorithms based on temporal and spatial characteristics of the touch input. Second, the adaptations could occur dynamically and automatically during flight; for example, a "turbulence mode" could be implemented where if the system detects a certain level of turbulence or a certain pilot input error rate, it automatically increases the force required to make inputs and/or changes the keyboard format from QWERTY to Alphabetic, for example, in order to reduce the error rate. When the system detects that the turbulence has decreased back below a pre-set threshold, the system could automatically revert to the "normal mode" where the QWERTY keyboard is used. Third, the touch force required and/or keyboard format could be adapted during the design phase based on the importance of the input function; for example, for high importance input where the impact of an error could have safety implications, a greater touch force could be programmed and/or the alphabetic keyboard layout could be used so that the likelihood of errors is reduced even though entry time will likely be increased. Examples of important input functions, for example, may relate to those that may compromise flight safety including fuel control, final approach, certain combat situations, and the like.

All of the adaptations described could be accomplished by modifications in the software in a touch screen driver. For touch screen technologies such as resistive, where the touch force is modifiable in the hardware, that modifiable capability could be used to adapt the touch force to the importance of the functions if the important functions are always presented in the same location on the display (the touch force could be varied physically by the location of the display being used). For those technologies and dynamic adaptations where the force is not modifiable physically or mechanically in real time, the adaptive touch force concept can still be applied if simulated touch force modifications can be created through software algorithms. The examples of adaptive triggers (pilot selection, functional importance, detected turbulence/error rate) would be implemented similarly. For the functional importance adaptation, the touch force adaptations and keyboard layout variations would be designed into the touch device such that some touch targets (high importance functions) always require more force than others (lower importance functions) and/or use of the more accurate keyboard. For the "turbulence mode" adaptation, the touch force and keyboard layout would be changed in real time (i.e., during flight), based on detection of a certain level of turbulence or error rate. For the pilot selectable touch force adaptation, the touch force could be changed by the pilot before or during the flight by designing a pilot select option.

A touch screen is disclosed having at least one display region configured to display one or more symbols. "Symbols" as used herein are defined to include alphanumeric characters, icons, signs, words, terms, phrases, and menu items. A particular symbol is selected by sensing the application (touch) of a digit, such as a finger or a stylus, to the touch-sensitive region (object) containing that symbol. Each display region includes touch-sensing circuitry disposed within for sensing the application of the digit or digits.

There are many types of touch screen sensing technologies, including capacitive, resistive, infrared, surface acoustic wave, and embedded optical. All of these technologies sense touches or near touches on a screen. For example, US patent 6,492,979 discloses the use of a combination of capacitive touch screen and force sensors, US patent 7,196,694 discloses the use of force sensors at the peripherals of the touch screen to determine the position of a touch, and US patent publication 2007/0229464 discloses the use of a capacitive force sensor array, overlaying a display to form a touch screen. The operation of a touch screen is well-known and is thus not described further herein.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

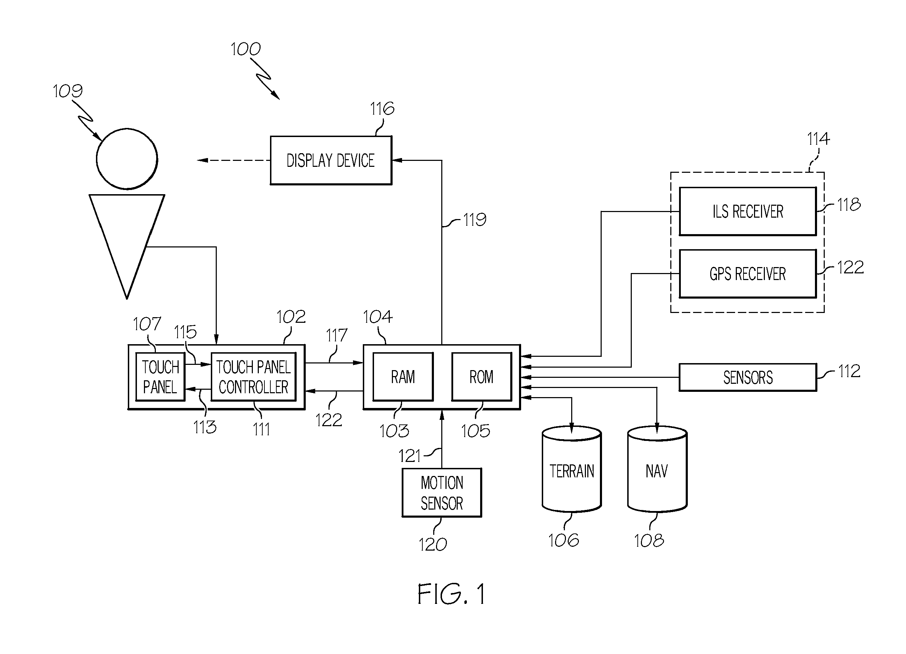

Though the method and touch screen of the exemplary embodiments may be used in any type of electronic device, for example, craft such as vehicles and heavy machinery, and small handheld mobile devices such as smart phones, the use in an aircraft system is described as an example. Referring to FIG. 1, a flight deck display system 100 includes a user interface 102, a processor 104, one or more terrain databases 106 sometimes referred to as a Terrain Avoidance and Warning System (TAWS), one or more navigation databases 108, sensors 112, external data sources 114, and one or more display devices 116. The user interface 102 is in operable communication with the processor 104 and is configured to receive input from a user 109 (e.g., a pilot) and, in response to the user input, to supply command signals to the processor 104. The user interface 102, generally, may be any one, or combination, of various known user interface devices including, but not limited to, one or more buttons, switches, or knobs (not shown); however, in the depicted embodiments, the user interface 102 includes a touch screen 107 and a touch screen controller 111. While the user interface 102 may be separate from the display devices 116 as shown, it preferably is integrated therewith in the exemplary embodiments. The touch screen controller 111 provides drive signals 113 to the touch screen 107, and a sense signal 115 is provided from the touch screen 107 to the touch screen controller 111, which periodically provides a controller signal 117 of the determination of a touch to the processor 104. The processor 104 interprets the controller signal 117, determines the application of the digit on the touch screen 107, and provides, for example, a signal 119 to the display device 116. Therefore, the user 109 uses the touch screen 107 to provide an input as more fully described hereinafter.

A motion sensing device 120, for example, an accelerometer, senses motion of the touch screen 107 and provides a signal 121 to the processor 104. A processor signal 122 provides instructions to the touch screen controller 111 to modify the input parameters in response to the various determined events (of which the sensed motion is one) as described hereinafter. The motion sensing device 120 may be disposed preferably within an assembly (not shown) housing the touch screen 107; however, may alternatively be disposed within the user interface 102 or generally within the flight deck display system 100, avionics system, flight deck, pilot seat, or within or externally to the aircraft body so that relative or absolute motion between the pilot's hand and the display can be detected or presumed. The worst case for vibration effects occurs when the user and the display are moving at different frequencies and amplitudes. It would be advantageous to have a motion sensor 120 on the pilot seat in addition to the flight deck display system 100, for example, so in situations where the seat is vibrating and the display is not, an accurate determination of the movement pertinent to the touching of the touch screen 107 may be made.

The processor 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

The processor 104 preferably is any one of numerous known general-purpose microprocessors or an application specific processor that operates in response to program instructions. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented. It will also be appreciated that the processor 104 may be implemented using various other circuits, and not just a programmable processor. For example, digital logic circuits and analog signal processing circuits could also be used.

No matter how the processor 104 is specifically implemented, it is in operable communication with the terrain databases 106, the navigation databases 108, and the display devices 116, and is coupled to receive various types of inertial data from the sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information. The preferred manner in which the textual, graphic, and/or iconic information are rendered by the display devices 116 will be described in more detail further below.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can read information from, and write information to, the memory 103, 105. In the alternative, the memory 103, 105 may be integral to the processor 104. As an example, the processor 104 and the memory 103, 105 may reside in an ASIC. In practice, a functional or logical module/component of the display system 116 might be realized using program code that is maintained in the memory 103, 105. For example, the display devices 116, may have associated software program components that are stored in the memory 103, 105. Moreover, the memory 103, 105 can be used to store data utilized to support the operation of the display system 116, as will become apparent from the following description.

The terrain databases 106 include various types of data representative of the terrain over which the aircraft is flying, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. The ILS 118 provides aircraft with horizontal (or localizer) and vertical (or glide slope) guidance just before and during landing and, at certain fixed points, indicates the distance to the reference point of landing on a particular runway. The GPS receiver 124 is a multi-channel receiver, with each channel tuned to receive one or more of the GPS broadcast signals transmitted by the constellation of GPS satellites (not illustrated) orbiting the earth.

The display devices 116, as noted above, in response to display commands supplied from the processor 104, selectively render various textual, graphic, and/or iconic information, and thereby supply visual feedback to the user 109. It will be appreciated that the display devices 116 may be implemented using any one of numerous known display devices suitable for rendering textual, graphic, and/or iconic information in a format viewable by the user 109. Non-limiting examples of such display devices include various cathode ray tube (CRT) displays, and various flat screen displays such as various types of LCD (liquid crystal display) and TFT (thin film transistor) displays. The display devices 116 may additionally be implemented as a screen mounted display, or any one of numerous known technologies. It is additionally noted that the display devices 116 may be configured as any one of numerous types of aircraft flight deck displays. For example, they may be configured as a multi-functional display, a horizontal situation indicator, or a vertical situation indicator, just to name a few. In the depicted embodiment, however, one of the display devices 116 is configured as a multi-functional display.

In operation, the display devices 116 are also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The display system 116 is suitably designed to process data obtained from the sources of flight status data in the manner described in more detail herein. In particular, the display system 116 can use the flight status data of the host aircraft when rendering the multifunctional display.

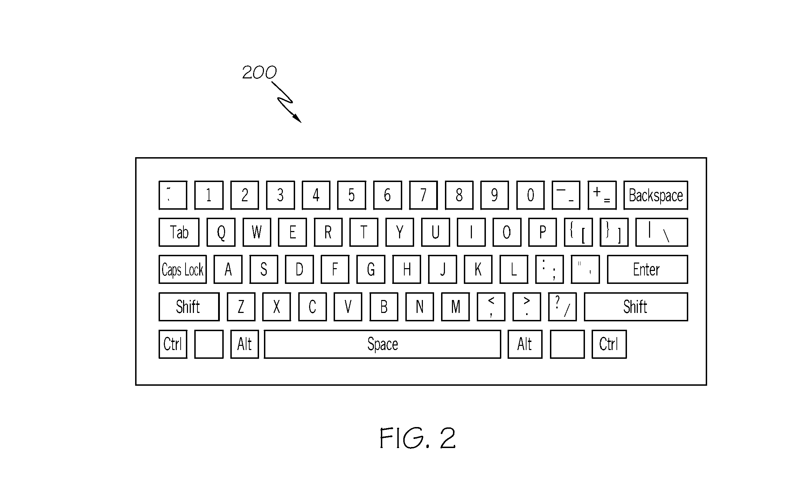

A typical QWERTY alphanumeric touch screen 200 (FIG. 2) includes at least forty keys including a key for each of the numbers "1" through "0", the letters "A" through "Z", and various functions such as "CLEAR", "ENTER", "Space", and directional arrows. The number of keys, several per row, requires the keys to be small, resulting in the keys being more prone to input errors.

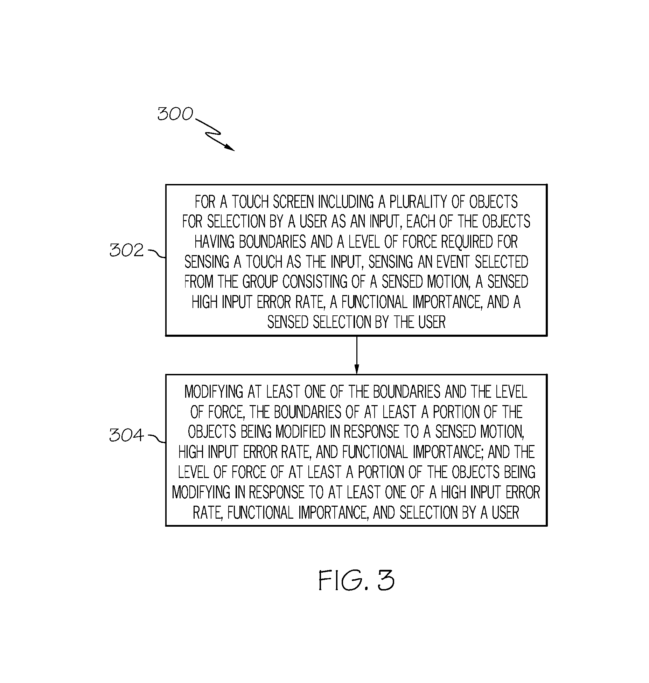

FIG. 3 is a flow chart that illustrates an exemplary embodiment of a process 300 suitable for use with a flight deck display system such as the display system 116. Process 300 represents one implementation of a method for displaying aircraft information (in the form of a touch screen display) on an onboard display element of a host aircraft. The various tasks performed in connection with process 300 may be performed by software, hardware, firmware, or any combination thereof. For illustrative purposes, the following description of process 300 may refer to elements mentioned above in connection with FIG. 1. In practice, portions of process 300 may be performed by different elements of the described system, e.g., a processor, a display element, or a data communication component. It should be appreciated that process 300 may include any number of additional or alternative tasks, the tasks shown in FIG. 3 need not be performed in the illustrated order, and process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

Referring to FIG. 3 and in accordance with an exemplary method embodiment, a touch screen includes a plurality of objects for selection by a user as an input, each of the objects having boundaries and a level of force required for sensing a touch as the input, sensing 302 an event selected from the group consisting of a sensed motion, a sensed high input error rate, a functional importance, and a sensed selection by the user. At least one of the boundaries and the level of force are modified 304, wherein the boundaries of at least a portion of the objects are modified in response to a sensed motion, high input error rate, and functional importance. The level of force required by of at least a portion of the objects are modified in response to at least one of a high input error rate, functional importance, and selection by a user.

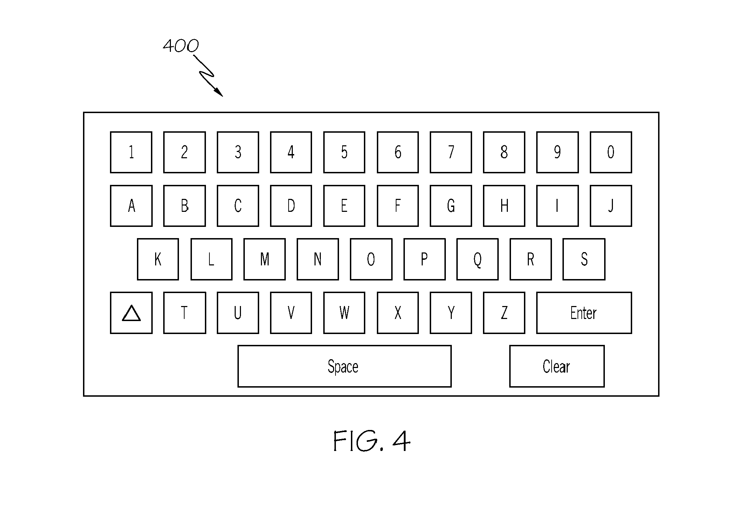

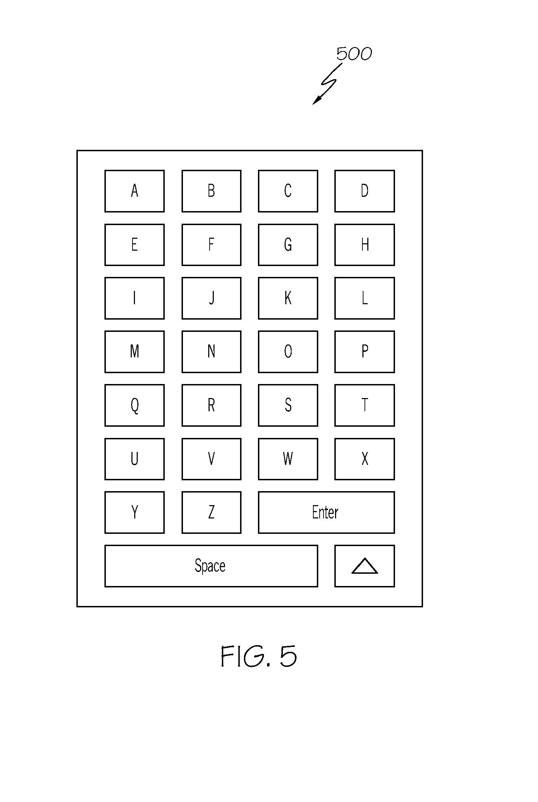

In the case of modifying the format (boundaries) of the touch screen as described in FIG. 3, the touch screen may assume, for example, the alphanumeric formats 400, 500 as shown in FIG. 4 and FIG. 5, respectively. Although the exemplary embodiments shown include alphanumeric characters, the format assumed may be any characters for input information. For example, modifying the formats to include fewer keys per row allows for larger objects, or area for sensing a touch, for each of the keys when the width of the display is small.

In the case of modifying the force required for sensing a touch, the size and/or format of the objects may also be modified.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of modifying input requirements for a touch screen, wherein the touch screen includes a plurality of objects for selection by a user as an input, each of the objects having boundaries and a level of force required for sensing a touch as the input, comprising:
sensing an event selected from the group consisting of a sensed motion of the touch screen, a sensed high input error rate, a functional importance, and a sensed large touch; and
modifying at least one of:
the boundaries of at least a portion of the objects in response to the sensed motion, the sensed high input error rate, and the functional importance; and
the level of force of at least a portion of the objects in response to the high input error rate, the functional importance, and the sensed large touch.

2. The method of claim 1 wherein a sensed motion consists of sensing turbulence.

3. The method of claim 1 wherein a sensed motion consists of sensing a gravitational force.

4. The method of claim 1 wherein a sensed motion consists of sensing a vibration.

5. The method of claim 1 wherein the touch screen is positioned in a craft and the functional importance comprises flight safety if the user selects an unintended object.

6. The method of claim 1 wherein the modifying at least one of the boundaries comprises modifying a format of the objects on the touch screen.

7. The method of claim 1 wherein the modifying at least one of the boundaries comprises changing to an alternative format.

8. The method of claim 1, wherein the boundaries comprise touch-sensitive areas and the modifying the boundaries comprises increasing a size of touch-sensitive areas.

9. A touch screen system for receiving an input from a user, the touch screen system comprising:
a touch screen configured to define a plurality of objects, wherein each of the objects may sense a touch as the input, wherein each object comprises an area having boundaries on the touch screen and defines a level of force required to sense the touch;
a system configured to sense an event and provide an output, wherein the event is selected from the group consisting of a sensed motion, a sensed high input error rate, a functional importance, and a sensed large touch;
a processor coupled to the touch screen and the system, and configured to modify, in response to the output, at least one of:
the boundaries of at least a portion of the objects in response to the sensed turbulence, the sensed high input error rate, and the functional importance, and
the level of force of at least a portion of the objects in response to the sensed high input error rate, the functional importance, and the sensed large touch.

10. The touch screen system of claim 9 wherein a sensed motion consists of sensing turbulence.

11. The touch screen system of claim 9 wherein a sensed motion consists of sensing a gravitational force.

12. The touch screen system of claim 9 wherein a sensed motion consists of sensing a vibration.

13. The touch screen system of claim 9 wherein the touch screen is positioned on a craft and the functional importance compromises flight safety if the user selects an unintended object.

14. The touch screen system of claim 9 wherein the processor is configured to modify the format of the objects on the touch screen.

15. The touch screen system of claim 9, wherein the boundaries comprise touch-sensitive areas and the modifying the boundaries comprises increasing a size of the touch-sensitive areas.
